# EUROPÄISCHE PATENTSCHRIFT

(11) **EP 0 995 625 B1**
(45) Veröffentlichungstag und Bekanntmachung des Hinweises auf die Patenterteilung: **01.10.2003**
(21) Anmeldenummer: 99119725.2
(22) Anmeldetag: 05.10.1999
(51) Int. Cl.: B60K 26/02, F02D 11/02

(54) **Hysteresemodul**
Hysteresis module
Module à hystérésis

(30) Priorität: 19.10.1998 DE 19848091
(43) Veröffentlichungstag der Anmeldung: 26.04.2000
(73) Patentinhaber: Siemens Aktiengesellschaft, 80333 München (DE)
(72) Erfinder: Kohlen, Peter, 35510 Butzbach (DE)

(56) Entgegenhaltungen:
- WO-A-98/51525
- DE-A- 4 300 096
- DE-A- 19 630 156
- US-A- 5 491 874

## Beschreibung

Die Erfindung befaßt sich mit einem Betätigungselement, das gegen die Kraft einer Rückstellfeder mit einem auf einer Drehachse drehbar gelagerten Element zwischen einer Ruhestellung und einer Endstellung stufenlos verstellbar ist, mit einem separaten Modul zur Erzeugung einer Krafthysterese beim Verschwenken um die Drehachse.

Derartige Module benötigt man beispielsweise dazu, in sog. "drive-by-wire"-Anlagen dazu, die durch die bisher übliche Seilzugübertragung vorhandenen Reibkräfte, die zu einer Krafthysterese beim Verschwenken der drehbar gelagerten Elemente führen, zu simulieren, um der Bedienperson die vertraute Betätigungscharakteristik zu erhalten.

Bisherige Lösungen, wie sie z. B. aus der DE 197 37 289 A1 und der DE 43 00 096 A bekannt sind, besitzen einen komplizierten mechanischen Aufbau, der teuer in der Herstellung und störungsempfindlich im Betrieb ist. Die bisher übliche Anlenkung von Hysteresemodulen über aufwendige Hebelkonstruktionen erfordert weiterhin die individuelle Anpassung des Hysteresemoduls an den jeweiligen Einsatzzweck.

Die US-A-5 491 874 beschreibt ein selbsthemmendes Gelenk, insbesondere für Notebook-Computer, bei welchen zwischen Gelenkhälften ein Federelement zur Erzeugung der Reibmomente vorgesehen ist.

Die Aufgabe der Erfindung besteht darin, ein Betätigungselement mit einem Hysteresemodul zu schaffen, das bei einfachem Aufbau variabel einsetzbar ist.

Erfindungsgemäß wird die Aufgabe dadurch gelöst, daß ein mit seinem einen Ende drehstarr mit der Drehachse gekoppeltes Federelement mit seinem freien Ende unmittelbar oder über ein Reibelement auf einer ortsfest angeordneten, gekrümmten Reibfläche gleitet.

Eine derartige Ausgestaltung bietet den Vorteil, daß sich das Modul unmittelbar separat auf der Drehachse des Betätigungselements anordnen läßt. Mit Hilfe einer angepaßten Flanschverbindung läßt sich das erfindungsgemäße Modul folglich bei einer Vielzahl unterschiedlicher Drehlagerungen ohne konstruktive Abänderungen einsetzen.

Ein besonders bevorzugtes Einsatzgebiet sind dabei Betätigungselemente zur Steuerung von Verbrennungskraftmaschinen, wie z. B. Fahrpedale oder Drehgriffe, da die Krafthysterese beim Betätigen eines Fahrpedals Autofahrern bekannt und vertraut ist. Der höhere Widerstand beim Niedertreten des Fahrpedals erlaubt eine feinfühligere Dosierung, während die durch das Hysteresemodul aufgebrachten Reibkräfte den Fahrer beim Halten des Fahrpedals in einer unveränderten Stellung entlasten. Über die Vorspannkraft des Federelements läßt sich das durch das Hysteresemodul erzeugte Reibmoment leicht variieren und den Erfordernissen anpassen. So ist es z. B. möglich, mit konstruktiv ein- und demselben Hysteresemodul ein ganzes Spektrum unterschiedlicher Anforderungen abzudecken, zumal beispielsweise im Automobilbereich verschiedene Hysteresekurven für unterschiedliche Automobile gewünscht sind.

Das erfindungsgemäße Betätigungselement erlaubt weiterhin durch konstruktiv einfache Weiterbildung das Erzielen einer progressiven oder degressiven Reibcharakteristik. Zur Erzielung einer Progression bildet man die Reibfläche spiralförmig mit von der Ruhestellung zur Endstellung hin abnehmenden Radius aus, während zum Erreichen einer Degression der Radius der spiralförmigen Reibfläche zur Endstellung hin zunimmt. Auch Kombinationen beider Bahnformen der Reibfläche sind ohne weiteres möglich, um beispielsweise im Teillastbereich, indem sich der Fahrer bei langen Autobahnfahrten bevorzugt aufhält und in dem eine feinfühlige Dosierung gewünscht ist, eine besonders große Krafthysterese anzustreben.

Vorzugsweise ist das Federelement eine Spiralfeder, deren eines Ende drehstarr mit der Drehachse verbunden ist und deren freies Ende mit einem Reibbelag oder unmittelbar auf der Reibfläche gleitet. Gegenüber anderen denkbaren Konstruktionen, beispielsweise einer in einer radialen Führung sitzenden Schraubenfeder mit einem Reibbelag an ihrem radial äußeren Ende, ergibt sich ein konstruktiv besonders einfacher Aufbau, insbesondere wenn die Außenseite der Spiralfeder unmittelbar auf der Reibfläche gleitet. Die Geometrie der Spiralfeder kann dazu ausgenutzt werden, eine drehrichtungsabhängige Charakteristik des Hysteresemoduls zu erzielen, deren Ursache in der durch Selbsthemmeffekte hervorgerufenen unterschiedlichen Normalkraft zwischen der Reibfläche und dem freien Ende der Spiralfeder herrührt.

In einer weiteren bevorzugten Ausführungsform der Erfindung ist vorgesehen, daß die Reibfläche über die normale Endstellung hinaus einen stark abnehmenden Radius aufweist, der als Kick-Down-Stellung gleichzeitig die absolute Endstellung des Betätigungselements darstellt.

Auf diese Weise läßt sich mit Hilfe des Hysteresemoduls auch der typische Widerstand eines Fahrpedals zum Erreichen der Kick-Down-Stellung simulieren, wozu bisher üblicherweise separate Schalter eingesetzt wurden. Dadurch läßt sich die Teileanzahl einer elektronischen Fahrpedalanlage weiter reduzieren und die Störanfälligkeit vermindern.

Nachfolgend wird anhand der beigefügten Zeichnungen näher auf ein Ausführungsbeispiel der Erfindung eingegangen. Es zeigen:
- Fig. 1: einen schematischen Querschnitt eines Hysteresemoduls;
- Fig. 2: einen Querschnitt eines mit einem Fahrpedalmodul gekoppelten Hysteresemoduls.

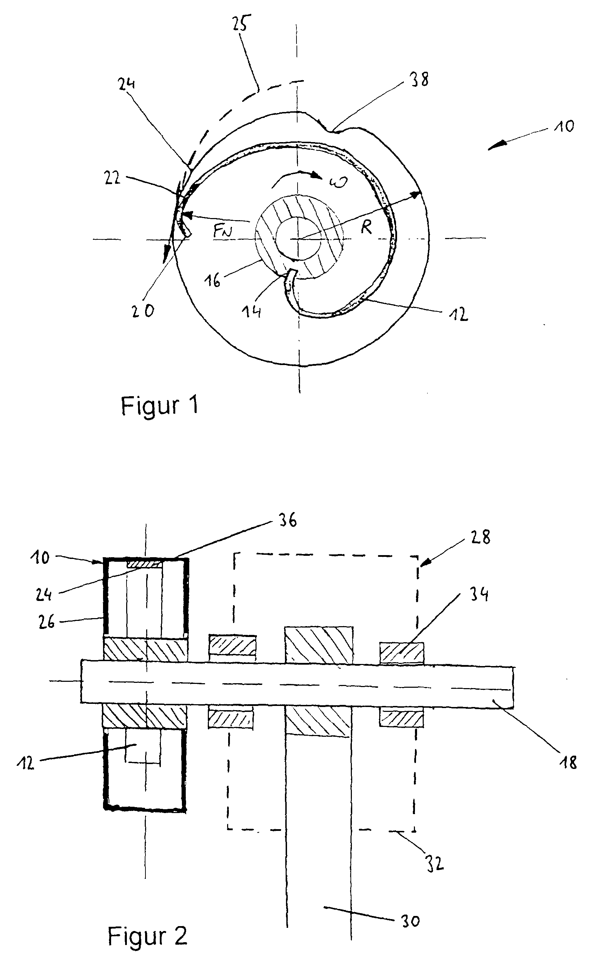

Der in Fig. 1 schematische dargestellte Aufbau eines Hysteresemoduls 10 besteht im wesentlichen aus einer Spiralfeder 12, die mit ihrem inneren Ende 14 in einem Ringelement 16 eingespannt ist, das drehstarr mit einer Welle (siehe Fig. 2) verbunden ist.

Das freie Ende 20 der Spiralfeder 12 gleitet mit seiner Außenfläche 22 auf einer gekrümmten Reibfläche 24, die starr an einem Gehäuse 26 (siehe Fig. 2) angeordnet ist.

Die Höhe der Normalkraft F_{N}, mit der die Außenfläche 22 des freien Ringfederendes 20 an der Reibfläche 24 anliegt, ist dabei zusammen mit dem Reibkoeffizienten der Reibpaarung, 22, 24 ein Maß für die auftretenden Reibkräfte, die als Reibmoment von dem Ringelement 16 auf die Welle 18 übertragen werden und entsprechend das zum Verdrehen der Welle 18 aus der Ruhestellung erforderliche Drehmoment erhöhen. Die Normalkraft der Außenfläche 22 bestimmt sich durch die Vorspannung der Spiralfeder 12 und in gewissem Umfang auch durch die geometrische Ausgestaltung der Spiralfeder 12 zwischen ihrer Einspannstelle 14 und der Anlagestelle an der Reibfläche 24, die zu gezielt ausnutzbaren Selbsthemmeffekten führen kann.

Die Reibfläche 24 ist mit konstantem Radius R ausgeführt, d. h. die Reibkräfte und damit die Hysterese des Betätigungsorgans sind bei einer derartigen Reibfläche über den gesamten Verstellbereich des Ringelements 16 konstant.

Die Reibfläche kann, wie im dargestellten Beispielsfall gestrichelt dargestellt, als zu einer degressiven Kennlinie führende Kurve 25 ausgebildet sein, deren Radius im Uhrzeigerrichtung zunimmt. Beim Verdrehen des Ringelements 16 aus der in Fig. 1 dargestellten Lage, die beispielsweise der Leerlaufstellung eines Fahrpedals entsprechen kann, in eine um 90° verdrehte Lage, beispielsweise der Vollgasstellung eines Fahrpedals gleitet die Außenfläche 22 auf der Reibfläche 24 mit zunehmenden Radius, wodurch sich die Vorspannung der Spiralfeder verringert und dementsprechend die Reibkräfte bzw. das Reibmoment abnehmen. Mit einem solchen Hysteresemodul 10 nimmt folglich auch die Hysterese beispielsweise eines gegen die Kraft einer Rückstellfeder betätigten Fahrpedals mit dem Annähern an die Vollaststellung ab.

Statt einer degressiven Kennlinie ist es je nach gewünschter Charakteristik des Hysteresemoduls auch denkbar, eine progressive Kennlinie zu wählen, deren wirksamer Radius zur Endstellung des Ringelements 16 und der Spiralfeder 12 hin abnimmt. Die Ausbildung der Reibfläche 24 als ringförmige Innenfläche mit konstantem Radius und der entsprechenden Charakteristik ist jedoch besonders einfach.

Fig. 2 zeigt schematisch die Anordnung des Hysteresemoduls 10 auf der Welle 18 eines Fahrpedalmoduls 28, in welchem ein Fahrpedal 30 in einem Gehäuse 32 mit Hilfe von Lagerelementen 34 verschwenkbar gelagert ist. Das Fahrpedal 30 ist dabei gegen die Kraft einer Rückstellfeder (nicht gezeigt) zwischen einer Leerlaufstellung und einer Vollaststellung beweglich.

Das Hysteresemodul 10 ist im dargestellten Beispiel seitlich des Gehäuses 32 des Fahrpedalmoduls 28 als separates Modul angeordnet, grundsätzlich kann jedoch das Hysteresemodul 10 auch in das Gehäuse 32 des Fahrpedalmoduls 28 integriert werden.

Bei der in Fig. 2 dargestellten Ausführungsform sitzt das in dem Gehäuse 26 des Hysteresemoduls 10 drehbar aufgenommene Ringelement 16 drehstarr auf der Welle 18, wobei die drehstarre Verbindung durch übliche Welle-Nabenverbindungen erreicht werden kann. Die Reibfläche 24 wird durch die Innenfläche eines Reibbelages 36 auf der Innenseite des Gehäuses 26 gebildet.

Die in Fig. 1 dargestellte Lage der Spiralfeder entspricht der Leerlaufstellung des Fahrpedals 30, während die Volllaststellung des Pedals ungefähr einer um 90° im Uhrzeigersinn verdrehten Lage der Spiralfeder 12 entspricht.

Die Stellung des Fahrpedals 30 wird über einen Sensor (nicht gezeigt) erfaßt und auf elektronischem Wege an das Motormanagement übermittelt. Das Hysteresemodul 10 simuliert bei dem ohne Seilzug auskommenden Fahrpedal 30 die Hystereseeigenschaften, die dem Autofahrer von den bisher bekannten Seilzugsystemen vertraut sind.

Bei Fahrzeugen mit Automatikgetriebe ist über die sog. Kick-Down-Stellung eine Beeinflussung des Automatikgetriebes mit Hilfe des Fahrpedals 30 möglich. Dabei wird nach dem Überwinden eines erhöhten Widerstandes über die Volllaststellung hinaus ein Herunterschalten des Getriebes in die kleinstmögliche Fahrstufe veranlaßt. Der erhöhte Fahrpedalwiderstand vor dem Erreichen der Kick-Down-Stellung wird bei dem zuvor beschriebenen Hysteresemodul 10 dadurch erreicht, daß ein Kick-Down-Nocken 38 im Uhrzeigersinn hinter der Vollaststellung der Spiralfeder 12 angeordnet ist, wobei der Radius des Nockens 38 deutlich unter dem Radius der Reibfläche 24 in der Vollaststellung liegt. Damit das freie Ende 20 der Spiralfeder 12 über den Nocken 38 gleiten und das Fahrpedal 30 die Kick-Down-Stellung erreichen kann, ist somit ein deutlich höherer Kraftaufwand bei der Betätigung des Fahrpedals notwendig, der durch die Wahl der radialen Lage des Nockens 38 gezielt variiert werden kann. Separate Schaltelemente sind daher nicht mehr nötig, zumal der Drehstellungssensor des Fahrpedalmoduls 28 das Erreichen der Kick-Down-Stellung problemlos erfassen kann.

### Bezugszeichenliste:

- 10: Hysteresemodul
- 12: Spiralfeder
- 14: inneres Ende
- 16: Ringelement
- 18: Welle
- 20: freies Ende
- 22: Außenfläche
- 24: Reibfläche
- 25: Kurve
- 26: Gehäuse
- 28: Fahrpedalmodul
- 30: Fahrpedal
- 32: Gehäuse
- 34: Lagerelemente
- 36: Reibbelag
- 38: Nocken

## Patentansprüche

1. Betätigungselement, das gegen die Kraft einer Rückstellfeder auf einer Drehachse zwischen einer Ruhestellung und einer Endstellung stufenlos verstellbar ist, mit einer Vorrichtung zur Erzeugung einer Krafthysterese beim Verschwenken um die Drehachse, **dadurch gekennzeichnet, dass** die Vorrichtung aus einem separaten Modul (10) mit einem Federelement (12) besteht, wobei das Federelement (12) mit seinem einen Ende 14) drehstarr mit einem mit der Drehachse drehstarr verbundenen Drehelement (16) gekoppelt ist und mit seinem freien Ende (20) unmittelbar oder über ein Reibelement auf einer ortsfest angeordneten, gekrümmten Reibfläche (24) gleitet.

2. Betätigungselement nach Anspruch 1, **dadurch gekennzeichnet, dass** das Drehelement als Ringelement (16) ausgebildet ist.

3. Betätigungselement nach Anspruch 1 oder 2, **dadurch gekennzeichnet, dass** das Betätigungselement (30) zur Steuerung einer Verbrennungskraftmaschine dient.

4. Betätigungselement nach Anspruch 2 oder 3, **dadurch gekennzeichnet, dass** die Reibfläche spiralförmig ausgebildet ist und ihr Radius von der Ruhestellung zur Endstellung hin abnimmt.

5. Betätigungselement nach Anspruch 2 oder 3, **dadurch gekennzeichnet, dass** die Reibfläche (24) spiralförmig ausgebildet ist, und ihr Radius von der Ruhestellung zur Endstellung hin zunimmt.

6. Betätigungselement nach einem der vorhergehenden Ansprüche, **dadurch gekennzeichnet, dass** das Federelement eine Spiralfeder (12) ist, deren eines Ende drehstarr mit dem Drehelement (16) verbunden ist und deren freies Ende (20) mit einem Reibbelag oder unmittelbar auf der Reibfläche (24) gleitet.

7. Betätigungselement nach einem der vorhergehenden Ansprüche, **dadurch gekennzeichnet, dass** die Reibfläche (24) über die Normalendstellung hinaus einen stark abnehmenden Radius (38) aufweist, der als Kick-Down-Stellung die absolute Endstellung des Drehelements (16) darstellt.

## Claims

1. Actuating element which can be adjusted in a stepless manner on a rotary shaft, counter to the force of a restoring spring, between a rest position and an end position, having a device for producing a force hysteresis during pivoting about the rotary shaft, **characterized in that** the device comprises a separate module (10) having a spring element (12), the spring element (12) having one end (14) coupled in a rotationally fixed manner to a rotary element (16), which is connected in a rotationally fixed manner to the rotary shaft, and sliding, by way of its free end (20), on a stationary, curved friction surface (24) directly or via a frictional element.

2. Actuating element according to Claim 1, **characterized in that** the rotary element (16) is designed as a ring element (16).

3. Actuating element according to Claim 1 or 2, **characterized in that** the actuating element (30) serves for controlling an internal combustion engine.

4. Actuating element according to Claim 2 or 3, **characterized in that** the friction surface is of helical design and its radius decreases from the rest position in the direction of the end position.

5. Actuating element according to Claim 2 or 3, **characterized in that** the friction surface (24) is of helical design and its radius increases from the rest position in the direction of the end position.

6. Actuating element according to one of the preceding claims, **characterized in that** the spring element is a helical spring (12), of which one end is connected to the rotary element (16) in a rotationally fixed manner and the free end (20) slides on the friction surface (24) by way of a friction lining or directly.

7. Actuating element according to one of the preceding claims, **characterized in that**, beyond the normal end position, the friction surface (24) has a vastly decreasing radius (38), which, as the kickdown position, constitutes the absolute end position of the rotary element (16).

## Revendications

1. Élément d'actionnement, mobile en continu entre une position de repos et une position finale à l'encontre de la force d'un ressort de rappel sur un axe de rotation, ledit élément d'actionnement comprenant un dispositif pour générer une hystérésis de la force lors du pivotement autour de l'axe de rotation, **caractérisé en ce que** ledit dispositif se compose d'un module séparé (10) comprenant un élément à ressort (12), l'une (14) des extrémités dudit élément à ressort (12) étant couplée de manière solidaire en rotation avec un élément rotatif (16), lequel est solidaire en rotation de l'axe de rotation, et l'extrémité libre (20) dudit élément à ressort glissant directement ou par l'intermédiaire d'un élément de frottement sur une surface de frottement (24) fixe et courbe.

2. Élément d'actionnement selon la revendication 1, **caractérisé en ce que** l'élément rotatif est réalisé sous la forme d'un élément annulaire (16).

3. Élément d'actionnement selon la revendication 1 ou 2, **caractérisé en ce que** l'élément d'actionnement (30) sert à commander une machine à combustion interne.

4. Élément d'actionnement selon la revendication 2 ou 3, **caractérisé en ce que** la surface de frottement est réalisée en spirale et que son rayon va décroissant, de la position de repos à la position finale.

5. Élément d'actionnement selon la revendication 2 ou 3, **caractérisé en ce que** la surface de frottement (24) est réalisée en spirale et que son rayon va croissant, de la position de repos à la position finale.

6. Élément d'actionnement selon l'une des revendications précédentes, **caractérisé en ce que** l'élément à ressort est un ressort spiral (12) dont une extrémité est solidaire en rotation de l'élément rotatif (16) et dont l'extrémité libre (20) glisse directement ou avec une garniture de frottement sur la surface de frottement (24).

7. Élément d'actionnement selon l'une des revendications précédentes, **caractérisé en ce que** la surface de frottement (24) présente un rayon (38) fortement décroissant au-delà de la position finale normale, lequel représente en tant que position «kick-down» la position finale absolue de l'élément rotatif (16).
